# EUROPEAN PATENT APPLICATION

(11) **EP 4 832 304 A1**
(43) Date of publication of application: **28.10.2026**
(21) Application number: 24907112.7
(22) Date of filing: 28.11.2024
(51) Int. Cl.: H02J 13/00, B60L 53/30, G06F 21/55

(54) **ABNORMALITY DETECTION METHOD, MONITORING DEVICE, AND PROGRAM**

(30) Priority: 21.12.2023 US 202363613553 P; 30.04.2024 JP 2024073747
(71) Applicant: Panasonic Intellectual Property Management Co., Ltd., Kadoma-shi, Osaka 571-0057 (JP)
(72) Inventor: TASAKI, Hajime, Kadoma-shi, Osaka 571-0057 (JP); YAMAGUCHI, Takahiro, Kadoma-shi, Osaka 571-0057 (JP)
(74) Representative: Grünecker Patent- und Rechtsanwälte PartG mbB
(86) International application number: PCT/JP2024/042185
(87) International publication number: WO 2025/134725

(57) **Abstract**

An anomaly detection method according to the present disclosure is performed in a monitoring apparatus that monitors communication between first power equipment and second power equipment, wherein the first power equipment performs at least one of supplying power to and receiving power from a charging/discharging device connected to the first power equipment, and the second power equipment controls the first power equipment. The anomaly detection method includes performing anomaly detection based on transmission/reception information transmitted and received between the first power equipment and the second power equipment. The anomaly detection method includes determining an analysis priority level for analyzing a detected event, the analysis priority level being determined based on: an anomaly score of the detected event being a security event detected in the anomaly detection, and information about a power tightness level indicating a degree of tightness of power demand at a detection time point.

## Description

### TECHNICAL FIELD

The present disclosure relates to an anomaly detection method, a monitoring apparatus, and a program.

### BACKGROUND ART

In power equipment such as a power plant and a charging station for an electric automobile, if suffering a cyberattack, an excessive load may occur to cause damage or errors. Therefore, installation of an intrusion detection system (IDS) that detects a cyberattack, introduction of a security monitoring system, or studies thereof are in progress as countermeasures against cyberattacks targeting power equipment.

For example, Patent Literature 1 discloses a technique for determining a priority level of a cyberattack in real time and facilitating judging the optimal countermeasure for minimizing damage of the cyberattack in light of situations of cyberattacks evolving in real time.

### CITATION LIST

### Patent Literature

Patent Literature 1: JP 2022-191649 A

### SUMMARY OF INVENTION

Under such circumstances, a cyberattack on power equipment in a power-tight state, in which power demand is large and a power supply amount is tightened, may expand damage. A power tightness level indicating a power-tight situation has not been considered in the countermeasures against security events (attack events) such as cyberattacks in power equipment. There is room for improvement in addressing anomaly in power equipment.

One object of the present disclosure is to appropriately address anomaly in power equipment even in a power-tight state.

An anomaly detection method according to the present disclosure is performed in a monitoring apparatus that monitors communication between first power equipment and second power equipment. The first power equipment is configured to perform at least one of supplying power to and receiving power from a charging/discharging device connected to the first power equipment. The second power equipment is configured to control the first power equipment. The anomaly detection method includes performing anomaly detection based on transmission/reception information transmitted and received between the first power equipment and the second power equipment. The anomaly detection method includes determining an analysis priority level for analyzing a detected event, the analysis priority level being determined based on: an anomaly score of the detected event being a security event detected in the anomaly detection, and information about a power tightness level indicating a degree of tightness of power demand at a detection time point.

### BRIEF DESCRIPTION OF DRAWINGS

FIG. 1 illustrates an example of a configuration of a charging system according to a first embodiment;
FIG. 2 illustrates an example of a configuration of a security monitoring server according to the first embodiment;
FIG. 3 illustrates an example of a configuration of a charging station management server according to the first embodiment;
FIG. 4 illustrates an example of a configuration of a charging apparatus according to the first embodiment;
FIG. 5 illustrates an example of a hardware configuration of an information processing apparatus that implements apparatuses of the charging system according to the first embodiment;
FIG. 6 illustrates an example of a configuration of a charging history table according to the first embodiment;
FIG. 7 illustrates an example of a configuration of an anomaly detection result table according to the first embodiment;
FIG. 8 is a sequence diagram illustrating an example of a procedure of anomaly detection processing executed by the charging system according to the first embodiment;
FIG. 9 is a flowchart illustrating an example of a procedure of corrected-score calculation processing based on a power tightness level, which is executed in the security monitoring server according to the first embodiment;
FIG. 10 illustrates calculation of a corrected score according to a power tightness level according to the first embodiment;
FIG. 11 illustrates an example of a configuration of a charging system according to a fourth embodiment;
FIG. 12 illustrates an example of a configuration of a security monitoring server according to a fifth embodiment;
FIG. 13 illustrates an example of a configuration of an anomaly detection result table according to the fifth embodiment;
FIG. 14 is a sequence diagram illustrating an example of a procedure of anomaly detection processing executed by a charging system according to the fifth embodiment;
FIG. 15 is a flowchart illustrating an example of a procedure of analysis priority level determination processing based on a power tightness level, which is executed in the security monitoring server according to the fifth embodiment; and
FIG. 16 illustrates an example of an event management screen to be displayed in a security monitoring server according to a sixth embodiment.

### DESCRIPTION OF EMBODIMENTS

Embodiments of a charging control method (an anomaly detection method), a charging control apparatus (a monitoring apparatus), a charging system (a monitoring system), a program, and a recording medium according to the present disclosure will be described below with reference to the drawings.

Note that, in description of the present disclosure, a component having the same or substantially the same function as a component described before in a figure already referred to may be denoted by the same reference sign, and description thereof may be appropriately omitted. The same or substantially the same parts may be represented in different dimensions and ratios in the drawings. For example, from a viewpoint of securing visibility of the drawings, only major components are denoted by reference signs in description of the drawings. Even a component having the same or substantially the same function as a component described before in a figure already referred to may fail to be denoted by a reference sign.

Note that, in the description of the present disclosure, components having the same or substantially the same function may be distinguished by adding alphanumeric characters to the end of a reference sign. Alternatively, when a plurality of components having the same or substantially the same function is not distinguished, the components may be integrated by omitting alphanumeric characters attached to the end of a reference sign.

In the description of the present disclosure, a charging system is illustrated. The charging system provides charging service and discharging service through power equipment installed in a charging station (power infrastructure) to a moving object such as an electric automobile which can be driven by using power from an in-vehicle battery.

Here, the charging service is service of supplying power from the charging station to the moving object and charging the battery provided on the moving object, such as selling power to a user of the moving object. Furthermore, the discharging service is service of discharging the battery provided on the moving object to charge the battery of the charging station by using power from the moving object and further supplying power from the moving object to a power grid (lines) on the upstream side, such as purchasing power from the user of the moving object.

Here, the moving object is an example of a charging/discharging device provided with a battery (storage battery), which can execute charging and discharging. In the charging, the battery is charged by using power supplied from the outside. In the discharging, power from the battery is received by the outside. Any battery such as a lithium-ion battery, a nickel-hydrogen battery, and an all-solid battery can be appropriately used as the battery of the charging/discharging device. Note that the moving object may be various electric vehicles, an electric automobile (EV vehicle) driven with a motor as a motive power source, or a hybrid vehicle driven by using a combination of an engine (internal combustion engine) and a motor as the motive power source. Although the moving object may be, for example, an automobile such as a passenger vehicle, a truck, and a motorcycle, the moving object may be an electric bicycle, an electric kickboard, an electric wheelchair, a construction machine, an agricultural machine, a vessel, a railway, an airplane (aircraft), etc. The moving object may be provided not only for passenger use but for cargo use. The moving object may be a carrier vehicle for baggage. Furthermore, the moving object may be able to autonomously travel or may be able to travel in response to a direct or remote operation of a driver.

Note that the technique according to the present disclosure can be applied not only to moving objects such as electric vehicles but to various power devices and power equipment, in which output or input of power is controlled by communication, such as an electric storage apparatus, a power generation apparatus, and a charging apparatus of a charging station.

### (First Embodiment)

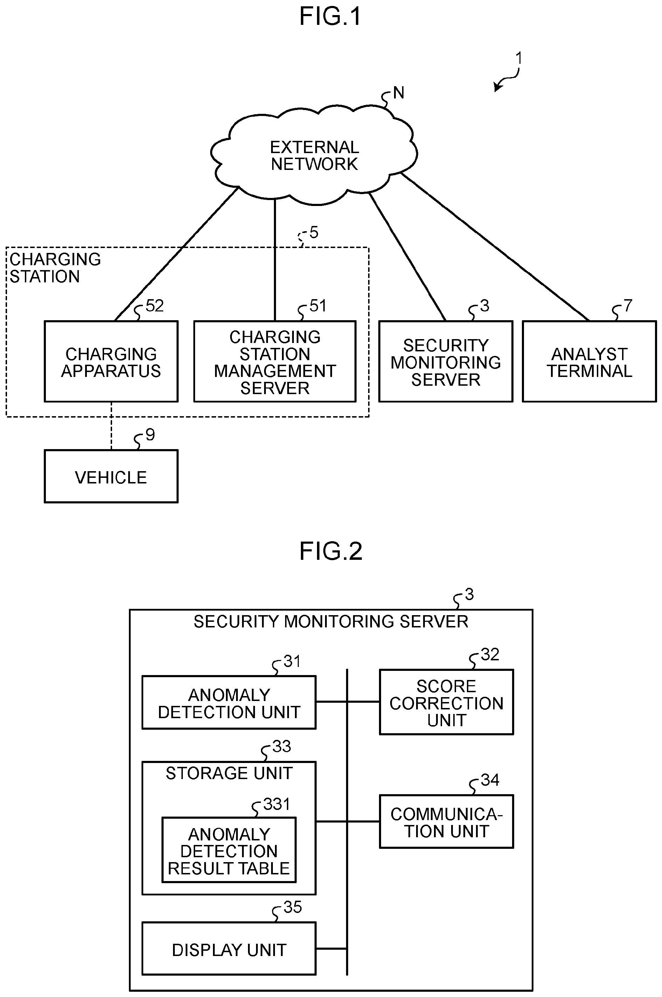

FIG. 1 illustrates an example of a configuration of a charging system 1 according to a first embodiment. As illustrated in FIG. 1, the charging system 1 includes a security monitoring server 3, a charging station 5, and an analyst terminal 7. The charging station 5 is a facility (power infrastructure) for providing charging service or discharging service to a vehicle 9 (moving object) that has come to the charging station 5. As illustrated in FIG. 1, the charging station 5 includes a charging station management server 51 and a charging apparatus 52.

As illustrated in FIG. 1, the security monitoring server 3, the charging station management server 51, and the charging apparatus 52 are communicably connected to each other via a network N, which is an electric communication line such as the Internet. The security monitoring server 3 and the analyst terminal 7 are communicably connected to each other via the network N. Note that the charging apparatus 52 are connected so as to be able to give and receive power to and from a power grid (not illustrated) on an upstream side via a power transmission grid of, for example, electric wires.

In one example, the charging apparatus 52 in the charging system 1 is controlled by communication with the charging station management server 51. The security monitoring server 3 monitors bidirectional communication between the charging station management server 51 and the charging apparatus 52. Furthermore, the security monitoring server 3 detects a security event indicating anomaly accompanying a cyberattack or a potential thereof based on a control message transmitted and received in the communication. The security monitoring server 3 calculates, for example, an anomaly score indicating normality or anomaly as a detection result. Furthermore, the security monitoring server 3 executes corrected-score calculation processing on the anomaly score indicating whether or not the detected security event (detected event) has anomaly. In the corrected-score calculation processing, a corrected score is calculated by correcting the anomaly score according to a power tightness level. The analyst terminal 7 analyzes the detected event, which has been detected, by presenting detected events to a person in charge of analysis (analyst) and acquiring analysis results of the detected events from the analyst in priority levels according to the corrected scores, for example, in descending order of corrected scores. The detected events presented to the analyst may include all the detected security events or only a security event determined to be anomaly, that is, an attack event having an anomaly score or a corrected score of larger than "0". Note that the attack event may be a set of attack messages obtained by aggregating various attack messages and alerts.

Note that the charging system 1 may include two or more charging stations 5. In the charging system 1, at least one charging station 5 may include two or more charging apparatuses 52. The charging system 1 may include two or more analyst terminals 7. Furthermore, at least one analyst terminal 7 is not required to be included in the charging system 1, and it may be an information processing apparatus provided outside the charging system 1. The vehicle 2 visiting the charging station 5 is connected to at least one charging apparatus 52 such that, for example, the charging apparatus 52 can supply power via a detachable charging cable (not illustrated) provided in the vehicle 9 or the charging apparatus 52. Note that two or more vehicles 9 may be connected or able to be connected to one charging apparatus 52. The vehicle 9 connected to the charging apparatus 52 is a moving object that can be driven by using power from a battery (not illustrated) provided therein. The vehicle 9 can receive provision of the charging service and the discharging service in the charging station 5. Note that the charging system 1 may include at least one vehicle 9.

The security monitoring server 3 is an example of a monitoring apparatus that monitors communication between the charging station management server 51 and the charging apparatus 52. The security monitoring server 3 can execute an anomaly detection method according to the embodiment. For example, the security monitoring server 3 can execute the corrected-score calculation processing based on a power tightness level according to the embodiment. FIG. 2 illustrates an example of a configuration of the security monitoring server 3 according to the first embodiment. As illustrated in FIG. 2, the security monitoring server 3 includes an anomaly detection unit 31, a score correction unit 32, a storage unit 33, a communication unit 34, and a display unit 35.

The anomaly detection unit 31 performs anomaly detection related to charging or discharging in the charging station 5 based on transmission/reception information transmitted and received between the charging station management server 51 and the charging apparatus 52. For example, the anomaly detection unit 31 determines whether or not a reception message (transmission/reception information) from the charging apparatus 52 is normal, and, when the message is not normal (anomaly), the anomaly detection unit 31 detects the anomaly as a security event. The anomaly detection unit 31 calculates an anomaly score indicating, for example, normality or anomaly based on the reception message for the detected security event (detected event). Additionally, when a security event is detected, the anomaly detection unit 31 outputs information (e.g., anomaly score) indicating a detection result to the storage unit 33 or to the outside. In one example, the anomaly detection unit 31 determines that a control target based on the reception message determined to be anomaly is an attack target and calculates an anomaly score with reference to a value of a score, a relational expression, and a parameter preliminarily determined for each attack target and stored in the storage unit 33, etc.

Note that the anomaly detection unit 31 may perform anomaly detection based not only on a reception message from the charging apparatus 52 but on a transmission message (transmission/reception information) transmitted from a host apparatus to the charging apparatus 52 or the like. Furthermore, the anomaly detection unit 31 may perform anomaly detection or calculate an anomaly score based not only on a control target (attack target) but on any piece of transmission/reception information indicated by a transmitted and received message such as control contents, a control value, an observation value (actual measurement value), and a prediction value. In the case, transmission/reception information used for performing anomaly detection may be the same as or different from transmission/reception information used for calculating an anomaly score. The anomaly detection unit 31 may calculate an anomaly score based not only on an attack target but on the type of a cyberattack, the number of attack targets, the extent of damage caused by an attack, etc. Furthermore, the anomaly detection unit 31 may be provided outside the security monitoring server 3, such as on the charging station management server 51 and the charging apparatus 52.

The score correction unit 32 determines an analysis priority level of analyzing a detected event based on an anomaly score of the detected event detected by anomaly detection and information about a power tightness level at a detection time point. Specifically, the score correction unit 32 executes the corrected-score calculation processing on an anomaly score indicating normality or anomaly of the detected event. In the corrected-score calculation processing, a corrected score is calculated by correcting the anomaly score according to a power tightness level. The score correction unit 32 determines an analysis priority level according to the calculated corrected score. Details of the corrected-score calculation processing will be described later.

Here, the information about a power tightness level indicates the degree of tightness of power demand at a detection time point, and indicates, for example, a charging control mode (operation mode) of the charging apparatus 52. The charging control mode of the charging apparatus 52 includes at least a usual mode and an inhibition mode in which the charging apparatus 52 performs an operation related to the charging service. Furthermore, the charging control mode of the charging apparatus 52 may further include a discharging mode in which the charging apparatus 52 performs an operation related to the discharging service.

For example, the usual mode is an operation mode in which charging is performed without a constraint on a charging upper limit. Specifically, the usual mode is an operation mode in which power is supplied to the vehicle 9 without restriction on power supply accompanying power tightness as in a case where power demand is not tightened. Here, the restriction on power supply accompanying power tightness refers to the setting of an upper limit value (threshold) of a power supply amount, a power supply speed, the number of times of power supply, and/or a power supply frequency, or the lowering of a preset upper limit value.

For example, the inhibition mode is an operation mode in which charging is performed with a constraint imposed on a charging upper limit. Specifically, the inhibition mode is an operation mode in which power is supplied to the vehicle 9 with restriction on power supply accompanying power tightness in response to a requirement from, for example, the charging station management server 51 or the power grid side as in a case where power demand is tightened.

For example, the discharging mode is an operation mode in which power is supplied from the vehicle 9 to the charging apparatus 52. Specifically, the discharging mode is an operation mode in which a battery provided on the vehicle 9 connected to the charging apparatus 52 is discharged and power discharged from the battery is supplied in response to a requirement from, for example, the charging station management server 51 or the power grid side as in a case where power demand is tightened.

The storage unit 33 is a storage medium or a storage apparatus that stores a control program, a parameter, data being processed, and data on a processing result related to processing executed by the security monitoring server 3. In one example, the storage unit 33 stores an anomaly detection result table 331 that saves output results from the anomaly detection unit 31 and the score correction unit 32. Details of the anomaly detection result table 331 will be described later.

The communication unit 34 is a communication circuit for communication with the outside of the security monitoring server 3. A communication circuit for wired or wireless communication can be appropriately used as the communication unit 34. A communication circuit compatible with various standards of 4G, 5G, 6G, Wi-Fi (registered trademark), Bluetooth (registered trademark), infrared communication, etc. can be appropriately used as a communication circuit for wireless communication.

The display unit 35 is a display that displays various images. A display device such as a liquid crystal display (LCD), an organic electroluminescence (EL) display, and a projector can be appropriately used as the display. In one example, the display unit 35 displays a determination result stored in the storage unit 33. For example, the display unit 35 displays a display screen, in which a list of detected events is displayed, based on the anomaly detection result table 331. Note that the display screen may display the person in charge of analysis (analyst) and a handling situation.

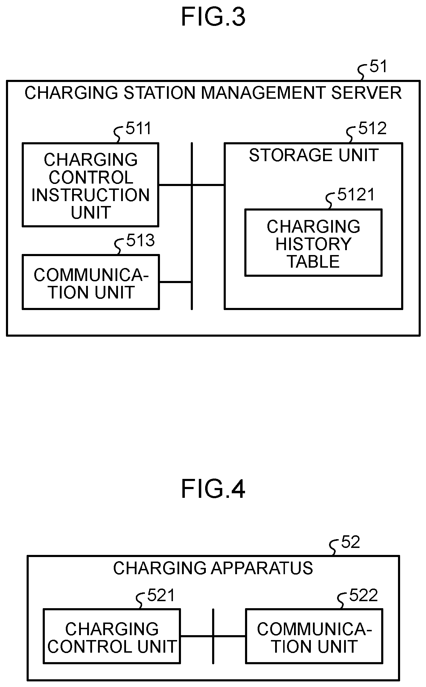

The charging station management server 51 is an example of second power equipment that controls the charging apparatus 52. For example, the charging station management server 51 can control power supply to the vehicle 9 performed by the charging apparatus 52 and discharging performed by the vehicle 9, that is, power reception from the vehicle 9. FIG. 3 illustrates an example of a configuration of the charging station management server 51 according to the first embodiment. As illustrated in FIG. 3, the charging station management server 51 includes a charging control instruction unit 511, a storage unit 512, and a communication unit 513.

The charging control instruction unit 511 controls an operation of the charging apparatus 52 by communication with the charging apparatus 52. For example, the charging control instruction unit 511 transmits a control message (transmission/reception information) for controlling the operation of the charging apparatus 52 through the communication unit 513. Furthermore, for example, the charging control instruction unit 511 receives a message (transmission/reception information) from the charging apparatus 52 through the communication unit 513. In one example, a message to be transmitted to the charging apparatus 52 includes a control message for controlling power supply to the connected vehicle 9. In one example, the message to be transmitted to the charging apparatus 52 includes a control message for controlling discharging from the connected vehicle 9. In one example, the message to be received from the charging apparatus 52 includes a message indicating that a transmitted control message has been received. In one example, the message to be received from the charging apparatus 52 includes a message indicating the situation of power supply or discharging, such as a power amount, a start time, an end time, a duration, and a battery remaining amount in power supply or discharging. In one example, the message to be received from the charging apparatus 52 includes a message indicating the state of the charging apparatus 52 during power supply or discharging, such as an observation value including temperature and a communication band. Note that these messages (transmission/reception information) may include a message for instructing the charging apparatus 52 on a charging control mode (operation mode) or a message for the charging apparatus 52 to give notification of a charging control mode that is being executed or that has been executed.

The storage unit 512 is a storage medium or a storage apparatus that stores a control program, a parameter, data being processed, and data on a processing result related to processing executed by the charging station management server 51. In one example, the storage unit 512 stores a charging history table 5121 that saves information indicating a history of charging and discharging performed by the charging apparatus 52 to be managed. Details of the charging history table 5121 will be described later.

The communication unit 513 is a communication circuit for communication with the outside of the charging station management server 51. A communication circuit for wired or wireless communication can be appropriately used as the communication unit 513. A communication circuit compatible with various standards of 4G, 5G, 6G, Wi-Fi (registered trademark), Bluetooth (registered trademark), infrared communication, etc. can be appropriately used as a communication circuit for wireless communication.

Note that, for example, the charging station management server 51 may be installed inside the charging station 5 together with the charging apparatus 52, or may be installed outside the charging station 5. Furthermore, the charging station management server 51 may control a charging apparatus 52 of another charging station 5. In this case, the charging station management server 51 is not required to be provided in the other charging station 5.

The charging apparatus 52 can operate according to an instruction (control message) from the charging station management server 51. The charging apparatus 52 is an example of first power equipment that can execute at least one of power supply and power reception to and from the connected vehicle 9. For example, the charging apparatus 52 can execute an operation related to charging service of supplying power (selling power) to the connected vehicle 9 and charging the battery provided on the vehicle 9 in response to a requirement from a user of the vehicle 9. Furthermore, for example, the charging apparatus 52 can execute an operation related to discharging service of receiving power (purchasing power) discharged from the battery provided on the connected vehicle 9 and discharging the battery provided on the vehicle 9 in response to a requirement from the charging station management server 51 and the power grid side. Note that the discharging service may be given in response to a requirement from the user of the vehicle 9. Note that the charging apparatus 52 capable of operating in the usual mode and the inhibition mode and the charging apparatus 52 capable of operating in the discharging mode may be independent apparatuses. FIG. 4 illustrates an example of a configuration of the charging apparatus 52 according to the first embodiment. As illustrated in FIG. 4, the charging apparatus 52 includes a charging control unit 521 and a communication unit 522.

The charging control unit 521 controls charging and discharging of the connected vehicle 9 under the control of the charging station management server 51. The charging control unit 521 operates the charging apparatus 52 in one of charging control modes including at least the usual mode, the inhibition mode, and the discharging mode. This causes the charging control unit 521 to implement functions of charging and discharging of the charging apparatus 52. In one example, the charging control unit 521 controls a charging control mode of the charging apparatus 52 in accordance with an instruction (control message) from the charging control instruction unit 511 provided on the charging station management server 51.

The communication unit 522 is a communication circuit for communication with the outside of the charging apparatus 52. A communication circuit for wired or wireless communication can be appropriately used as the communication unit 522. A communication circuit compatible with various standards of 4G, 5G, 6G, Wi-Fi (registered trademark), Bluetooth (registered trademark), infrared communication, etc. can be appropriately used as a communication circuit for wireless communication.

The analyst terminal 7 is an information processing apparatus utilized by the person in charge of analysis, who performs the analysis. The analyst terminal 7 can execute analysis processing on a determination result of anomaly detection processing according to the embodiment, that is, a detected event. In one example, the analyst terminal 7 receives an analysis request from the security monitoring server 3. For example, the analysis request is transmitted to an analyst terminal 7 utilized by a person in charge of analysis, for whom allocation has been determined in the security monitoring server 3. The analysis request can contain various types of information about a detected event to be analyzed. For example, the analysis request may contain some or all of items of the anomaly detection result table 331 and the charging history table 5121. Furthermore, for example, the analysis request may contain information about an apparatus in which a detected event to be analyzed has occurred and an apparatus connected to the apparatus, such as names and types of the charging station management server 51, the charging apparatus 52, and the vehicle 9, installed application programs, and versions of the application programs. In one example, the analyst terminal 7 displays various display screens such as a notification screen for notifying an analyst of a detected event to be analyzed and an input screen for receiving input of an analysis result from the analyst through a provided display and a connected display. In one example, the analyst terminal 7 transmits an analysis result input from the analyst to the security monitoring server 3.

Note that the analyst terminal 7 may be able to execute analysis itself, or may be able to execute analysis assist of generating information for assisting analysis of a person in charge. In this case, the analyst terminal 7 may execute analysis or analysis assist by using a machine learning model in which a parameter has been determined such that an analysis result or assisting information is output in response to input of information about a detected event to be analyzed. In the machine learning model, a parameter may be determined by learning using, as pieces of teacher data, information about accumulated past detected events and past analysis results given by an analyst for the detected events. Any machine learning model such as a convolutional neural network (CNN) can be used as the machine learning model. Furthermore, the analyst terminal 7 may be provided outside the charging system 1.

Note that two or more apparatuses in the charging system 1 according to the embodiment described above may be integrated with each other. For example, the charging station management server 51 and the charging apparatus 52 may be integrated with each other. Alternatively, the charging station management server 51 may be implemented by cooperation between two or more charging apparatuses 52. For example, the security monitoring server 3 and the analyst terminal 7 may be integrated with each other. Alternatively, the security monitoring server 3 may be implemented by cooperation between two or more analyst terminals 7.

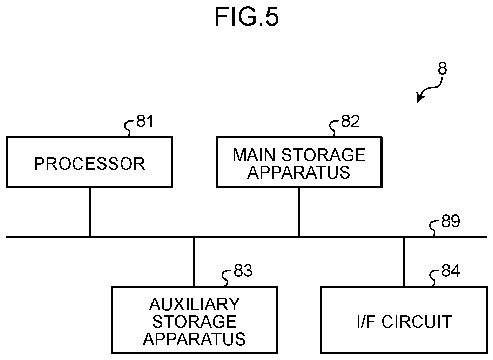

FIG. 5 illustrates an example of a hardware configuration of an information processing apparatus 8 that implements the apparatuses (security monitoring server 3, charging station management server 51, charging apparatus 52, and analyst terminal 7) of the charging system 1 according to the first embodiment. As illustrated in FIG. 5, the information processing apparatus 8 includes a processor 81, a main storage apparatus 82, an auxiliary storage apparatus 83, and an interface (I/F) circuit 84. The processor 81, the main storage apparatus 82, the auxiliary storage apparatus 83, and the I/F circuit 84 are communicably connected to each other via, for example, a bus 89. Note that each component of the information processing apparatus 8 may be implemented by a combination of two or more components.

The information processing apparatus 8 has a hardware configuration including at least one processor 81 and at least one main storage apparatus 82 (memory) and using a usual computer. For example, at least one processor 81 implements functions of apparatuses by loading a program saved in the auxiliary storage apparatus 83 to the main storage apparatus 82 and executing the loaded program. Note that at least one processor 81 of the information processing apparatus 8 may be configured as a dedicated hardware circuit.

For example, in the security monitoring server 3, at least one processor 81 implements the function of the security monitoring server 3 including the anomaly detection unit 31 and the score correction unit 32. Note that the anomaly detection unit 31 may execute a part or all of the function of the score correction unit 32. The anomaly detection unit 31 and the score correction unit 32 may be implemented as one function. For example, in the charging station management server 51, at least one processor 81 implements the function of the charging station management server 51 including the charging control instruction unit 511. For example, in the charging apparatus 52, at least one processor 81 implements the function of the charging apparatus 52 including the charging control unit 521. For example, in the charging apparatus 52, at least one processor 81 implements the function of the analyst terminal 7.

Various processors such as a central processing unit (CPU), a graphics processing unit (GPU), an application specific integrated circuit (ASIC), and a field programmable gate array (FPGA) can be appropriately used as at least one processor 81.

Various memories such as a random access memory (RAM) can be appropriately used as the main storage apparatus 82.

Various recording media and recording apparatuses such as a read only memory (ROM), a hard disk drive (HDD), a solid state drive (SSD), and a flash memory can be appropriately used as the auxiliary storage apparatus 83.

For example, in the security monitoring server 3, at least one main storage apparatus 82 and at least one auxiliary storage apparatus 83 implement the storage unit 33. For example, in the charging station management server 51, at least one main storage apparatus 82 and at least one auxiliary storage apparatus 83 implement the storage unit 512. For example, in each of the charging apparatus 52 and the analyst terminal 7, at least one main storage apparatus 82 and at least one auxiliary storage apparatus 83 implement each storage unit (not illustrated).

The I/F circuit 84 is an interface for implementation of a function related to input and output, connection with an external device, and/or communication with the outside. Note that the I/F circuit 84 may be an output interface that connects or implements an output device that outputs voice, an image, and a video, an input interface that connects or implements an input device that acquires operation input of the user, or an interface that functions as these devices. Various displays such as an LCD display, an organic EL display, and a projector and a speaker can be appropriately used as the output device. Furthermore, a keyboard, a mouse, a touch panel, and a microphone can be appropriately used as the input device.

For example, in the security monitoring server 3, the I/F circuit 84 implements the output interface (display unit 35) that connects or implements the output device, the input interface (not illustrated) that connects or implements the input device, and the communication interface (communication unit 34) for communication with the outside. For example, in the charging station management server 51, the I/F circuit 84 implements the communication interface (communication unit 513) for communication with the outside. For example, in the charging apparatus 52, the I/F circuit 84 implements a power interface that connects a power grid (lines) and the vehicle 9 and the communication interface (communication unit 513) for communication with the outside. For example, in the analyst terminal 7, the I/F circuit 84 implements an output interface (not illustrated) that connects or implements the output device, an input interface (not illustrated) that connects or implements the input device, and a communication interface (not illustrated) for communication with the outside.

Note that, although only configurations of apparatuses of the charging system 1 according to the embodiment necessary for describing a main part of the embodiment have been illustrated, the configurations of the apparatuses are not limited thereto.

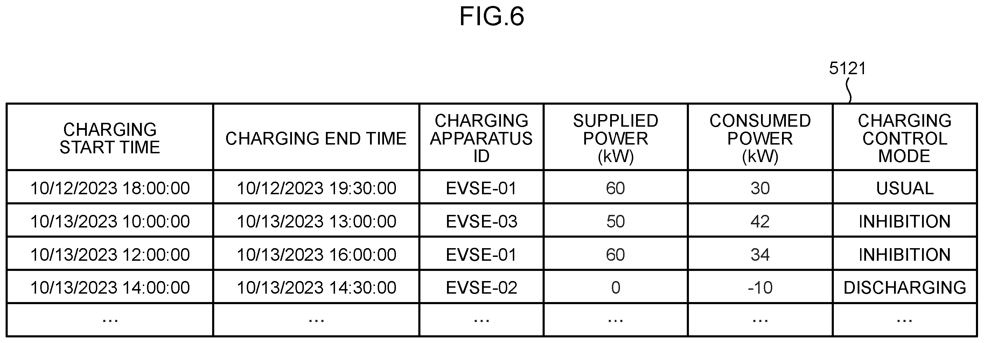

Here, management of the history of charging and discharging of the charging apparatus 52 to be managed by the charging station management server 51 according to the embodiment will be described with reference to the drawings. FIG. 6 illustrates an example of a configuration of the charging history table 5121 according to the first embodiment. As illustrated in FIG. 6, the charging history table 5121 contains items of at least "Charging start time", "Charging end time", "Charging apparatus ID", "Supplied power (kW)", "Consumed power (kW)", and "Charging control mode". Information indicating the time when charging and discharging start and end is saved in the items of "Charging start time" and "Charging end time", respectively. Identification information for uniquely identifying the charging apparatus 52 that has performed charging and discharging is saved in the item of "Charging apparatus ID". A value of a power amount of power from the power grid (lines) used at the time of charging is saved in the item of "Supplied power (kW)". Therefore, in the item of "Supplied power (kW)", a value of 0 or more is saved at the time of charging while a value of zero "0" is saved at the time of discharging. A value of an amount of power supplied from the charging apparatus 52 to the battery of the vehicle 9 is saved at the time of charging and discharging in the item of "Consumed power (kW)". Therefore, in the item of "Consumed power (kW)", a positive value of 0 or more is saved at the time of charging while a negative value is saved at the time of discharging. Here, the consumed power at the time of charging of the vehicle 9 may be all or some of supplied power. In short, all the power supplied from the power grid to the charging apparatus 52 is not required to be directly supplied to the vehicle 9. The consumed power has a value of a power amount with the supplied power as an upper limit. Information indicating which charging control mode the charging apparatus 52 is in at the time of charging and discharging is saved in the item of "Charging control mode". Here, the information indicating which charging control mode the charging apparatus 52 is in indicates the degree of tightness of power demand in another charging station 5 in a power grid on the upstream side or a common power grid including a host station, and is an example of the information about a power tightness level.

Note that, when some of supplied power at the time of charging of the vehicle 9 is utilized as consumed power, a storage battery provided on or attached to the charging apparatus 52 may accumulate the other power of the supplied power. Similarly, although power expressed as consumed power of a negative value at the time of discharging of the vehicle 9 is supplied to, for example, a power grid, the storage battery of the charging apparatus 52 may accumulate some or all of the power. Note that, when the storage battery of the charging apparatus 52 accumulates power discharged from the vehicle 9, not "0" but a negative value may be saved in the item of supplied power. Note that power may be supplied from the power grid to the battery of the vehicle 9 or from the vehicle 9 to the power grid via or without passing through the storage battery of the charging apparatus 52. Furthermore, in addition to or instead of power from the power grid, power from the storage battery of the charging apparatus 52 may be used as power supplied to the vehicle 9 as consumed power at the time of charging of the vehicle 9. Any battery such as a lithium-ion battery, a nickel-hydrogen battery, and an all-solid battery can be appropriately used as the storage battery (battery) provided on or attached to the charging apparatus 52.

In the charging station management server 51, the charging control instruction unit 511 saves the history of charging and discharging of the charging apparatus 52 to be managed in the charging history table 5121 stored in the storage unit 512, and manages the history. In one example, each time charging and discharging are performed in the charging apparatus 52 to be managed, the charging control instruction unit 511 saves information about the charging and discharging in the charging history table 5121. In one example, each time the charging control mode is switched in the charging apparatus 52 to be managed, the charging control instruction unit 511 saves information about the charging and discharging in the charging history table 5121. Note that a form may be adopted in which recording is performed for an item other than "Charging control mode" each time charging and discharging are performed in the charging apparatus 52 to be managed and recording is performed for an item of "Charging control mode" each time the charging control mode is switched.

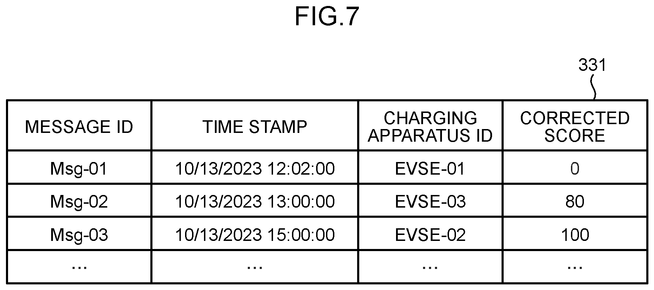

Here, a determination result output in the anomaly detection processing performed by the security monitoring server 3 according to the embodiment will be described with reference to the drawings. FIG. 7 illustrates an example of a configuration of the anomaly detection result table 331 according to the first embodiment. As illustrated in FIG. 7, the anomaly detection result table 331 contains items of at least "Message ID", "Time stamp", "Charging apparatus ID", and "Corrected score". Identification information for uniquely identifying a message in which anomaly (security event) has been detected is saved in the item of "Message ID". Information indicating the time when anomaly has been detected is saved in the item of "Time stamp". Identification information for uniquely identifying the charging apparatus 52 that has transmitted or received the message in which anomaly has been detected is saved in the item of "Charging apparatus ID". Note that, instead of or in addition to the item of "Charging apparatus ID", an item of "Charging station management server ID" may be provided. Identification information for uniquely identifying the charging station management server 51 of a target of transmission and reception is saved in the "Charging station management server ID". Information indicating a corrected score calculated in the corrected-score calculation processing is saved in the item of "Corrected score".

In the security monitoring server 3, the anomaly detection unit 31 and/or the score correction unit 32 saves a determination result in the anomaly detection processing in the anomaly detection result table 331 stored in the storage unit 33, and manages the determination result. In one example, in the anomaly detection processing, each time an anomaly score is calculated for a detected event, that is, each time a determination result of normality or anomaly is output, the anomaly detection unit 31 saves information about the detected event in the anomaly detection result table 331. In one example, each time a corrected score is calculated for a detected event, the score correction unit 32 saves information about the detected event in the anomaly detection result table 331. Note that a form may be adopted in which recording is performed for an item other than "Corrected score" each time an anomaly score is calculate and recording is performed for an item of "Corrected score" each time a corrected score is calculated.

An operation example of the charging system 1 according to the embodiment will be described below with reference to the drawings. Note that processing to be described below is an example, and it is also possible to change the processing order, delete part of the processing, and add another piece of processing.

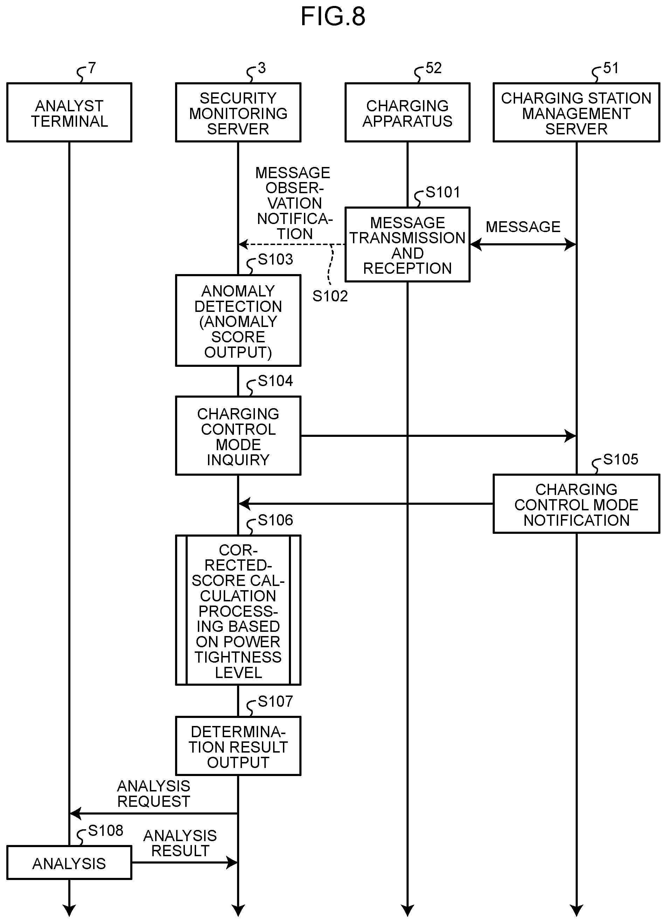

FIG. 8 is a sequence diagram illustrating an example of the procedure of the anomaly detection processing executed by the charging system 1 according to the first embodiment.

When a message is transmitted or received between the charging station management server 51 and the charging apparatus 52 (S101), the anomaly detection unit 31 of the security monitoring server 3 observes the transmitted or received message (S102). The anomaly detection unit 31 may observe the transmitted or received message based on a notification from at least one of the charging station management server 51 and the charging apparatus 52, or may observe the transmitted or received message by monitoring the transmission and reception themselves, such as by referring to a communication log. The anomaly detection unit 31 performs the anomaly detection processing based on the observed message, and outputs an anomaly score calculated in the anomaly detection processing to the score correction unit 32 (S103). Furthermore, the anomaly detection unit 31 saves a record of a detected event in the anomaly detection result table 331 of the storage unit 33. As described above, the anomaly detection unit 31 performs anomaly detection based on communication data and a communication amount on the transmitted or received message, and outputs a determination result (detection result).

The score correction unit 32 of the security monitoring server 3 inquires of the charging station management server 51 a charging control mode of a target charging apparatus 52 for the detected event (S104). The charging station management server 51 refers to the charging history table 5121 in response to an inquiry from the security monitoring server 3, and outputs information indicating the charging control mode of the charging apparatus 52 to the security monitoring server 3 (S105). Thereafter, the score correction unit 32 executes the corrected-score calculation processing based on a power tightness level and calculates a corrected score by correcting an anomaly score according to information indicating the charging control mode regarding which a notification has been given (S106). Furthermore, the score correction unit 32 saves information indicating a corrected score in a record of the detected event of the anomaly detection result table 331. As described above, when the determination result of the anomaly detection based on communication data and a communication amount on the transmitted or received message indicates an anomaly, the score correction unit 32 inquires of the charging station management server 51 the charging control mode of the target charging apparatus 52.

The anomaly detection unit 31 of the security monitoring server 3 outputs a determination result through, for example, the display unit 35 based on the anomaly detection result table 331 in which records of detected events are saved (S107). Any output form of the determination result may be adopted. In one example, a list of detected events may be displayed such that a detected event having a higher corrected score is highly ranked. Thereafter, the analyst terminal 7 performs processing related to analysis in response to an analysis request from the security monitoring server 3 (S108). In one example, in the processing related to analysis, the analyst terminal 7 presents detected events in descending order of corrected scores to a person in charge of analysis (analyst), acquires analysis results of the detected events from the analyst, and outputs the acquired analysis results to the security monitoring server 3. In one example, a user of the security monitoring server 3 receives outputs of determination results, and allocates the detected events to analysts in, for example, descending order of corrected scores. Then, the security monitoring server 3 transmits an analysis request for a corresponding detected event to an analyst terminal 7 of an analyst for whom allocation has been made. Note that a person in charge of analysis or an allocation rule may be preliminarily determined in, for example, a stage in which an anomaly score is calculated. A configuration may be adopted in which a notification of an analysis request is given to the analyst terminal 7 at any timing such as in a stage in which a corrected score is calculated. The analyst terminal 7 presents a detected event for which an analysis request has been made to the analyst, acquires an analysis result from the analyst, and outputs an acquired analysis result to the security monitoring server 3.

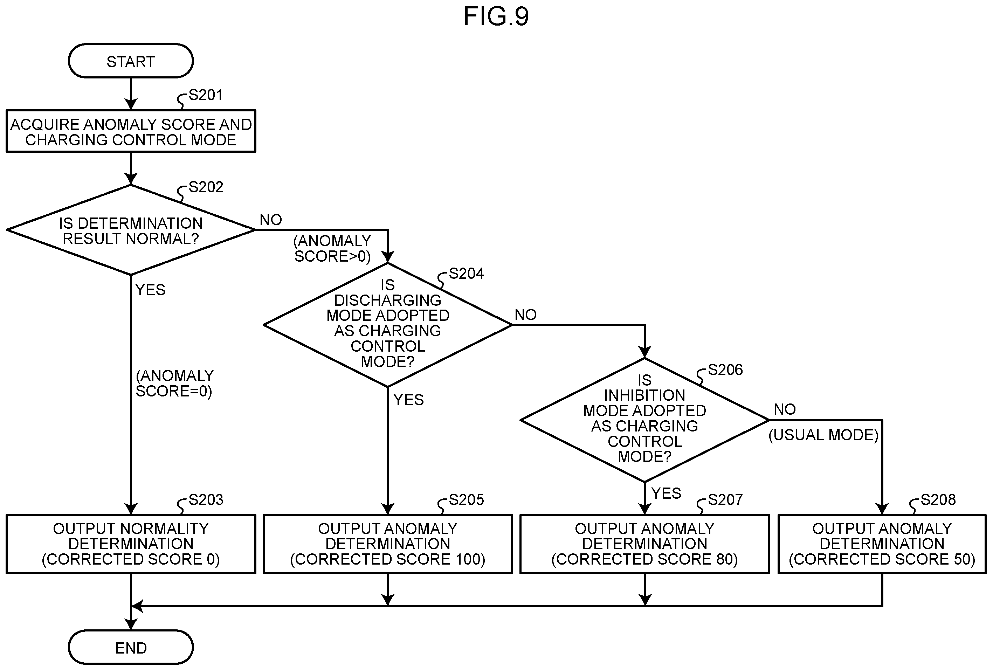

Here, corrected-score calculation processing executed in the anomaly detection processing in FIG. 8 will be described. FIG. 9 is a flowchart illustrating an example of a procedure of the corrected-score calculation processing based on a power tightness level, which is executed in the security monitoring server 3 according to the first embodiment. FIG. 9 illustrates a case where a corrected score is calculated by performing correction by replacing an anomaly score with a correction value according to information about the power tightness level. Note that values of corrected scores corresponding to charging control modes in FIG. 9 are examples, and can be appropriately set within a range in which the magnitude relation therebetween is maintained.

In the security monitoring server 3, the score correction unit 32 acquires an anomaly score indicating normality "0" or anomaly "1", which is a determination result from the anomaly detection unit 31, and information indicating a charging control mode from the charging station management server 51 (S201). Furthermore, the score correction unit 32 determines whether or not the determination result from the anomaly detection unit 31 indicates a normality (S202).

When the determination result from the anomaly detection unit 31 indicates a normality (S202: Yes), the score correction unit 32 outputs a normality determination, that is, a corrected score "0" as a determination result based on a power tightness level (S203). Thereafter, the flow in FIG. 9 ends, and the processing proceeds to S107 in FIG. 8. In short, the score correction unit 32 outputs the corrected score "0" indicating a normality determination based on a power tightness level regardless of the power-tight state to an anomaly score "0" indicating a normality determination based on a message.

When the determination result from the anomaly detection unit 31 indicates anomaly (S202: No), the score correction unit 32 determines whether or not the discharging mode is adopted as the charging control mode (S204). When the discharging mode is adopted as the charging control mode (S204: Yes), the score correction unit 32 outputs a corrected score "100" indicating an anomaly determination based on a power tightness level to an anomaly score "1 (> 0)" indicating a normality determination based on a message (S205). Thereafter, the flow in FIG. 9 ends, and the processing proceeds to S107 in FIG. 8. Note that adopting the discharging mode as the charging control mode indicates a power-tight state with a particularly high power tightness level (high power-tight state) in which, for example, power tightness requires the vehicle 9 to discharge and provide power. In short, in the discharging mode indicating the high power-tight state, the score correction unit 32 outputs the highest corrected score "100" for the anomaly score "1 > 0" indicating an anomaly determination based on a message while taking into consideration of a power tightness level. Therefore, in a configuration in which a higher analysis priority level is determined for a higher corrected score, in the discharging mode, an analysis priority level higher than those in the inhibition mode and the usual mode is determined.

When a mode other than the discharging mode is adopted as the charging control mode (S204: No), the score correction unit 32 determines whether or not the inhibition mode is adopted as the charging control mode (S206). When the inhibition mode is adopted as the charging control mode (S206: Yes), the score correction unit 32 outputs a corrected score "80" indicating an anomaly determination based on a power tightness level to an anomaly score "1 (> 0)" indicating normality determination based on a message (S207). Thereafter, the flow in FIG. 9 ends, and the processing proceeds to S107 in FIG. 8. Note that adopting the inhibition mode as the charging control mode indicates a power-tight state with a power tightness level that is high next to that of the high power-tight state (medium power-tight state) in which, for example, power tightness does not yet require the vehicle 9 to discharge but requires restriction on power supply. In short, in the inhibition mode indicating the medium power-tight state indicating tightness next to the high power-tight state, the score correction unit 32 outputs the corrected score "80" for the anomaly score "1 > 0" indicating an anomaly determination based on a message, which is the highest next to the corrected score in the discharging mode, while taking into consideration of a power tightness level. Therefore, in a configuration in which a higher analysis priority level is determined for a higher corrected score, in the inhibition mode, an analysis priority level lower than that in the discharging mode and higher than that in the usual mode is determined.

When a mode other than the inhibition mode, that is, the usual mode is adopted as the charging control mode (S206: No), the score correction unit 32 outputs a corrected score "50" indicating an anomaly determination based on a power tightness level to an anomaly score "1 (> 0)" indicating a normality determination based on a message (S208). Thereafter, the flow in FIG. 9 ends, and the processing proceeds to S107 in FIG. 8. Note that adopting the usual mode as the charging control mode indicates a power-tight state with the lowest power tightness level (low power-tight state) in which, for example, power tightness does not yet require restriction on power supply or power is not tightened. In short, in the usual mode indicating the low power-tight state, the score correction unit 32 outputs the corrected score "50", which is lower than that in the inhibition mode, for the anomaly score "1 > 0" indicating an anomaly determination based on a message while taking into consideration of a power tightness level. Therefore, in a configuration in which a higher analysis priority level is determined for a higher corrected score, in the usual mode, an analysis priority level lower than those in the discharging mode and the inhibition mode is determined.

### (Application Example)

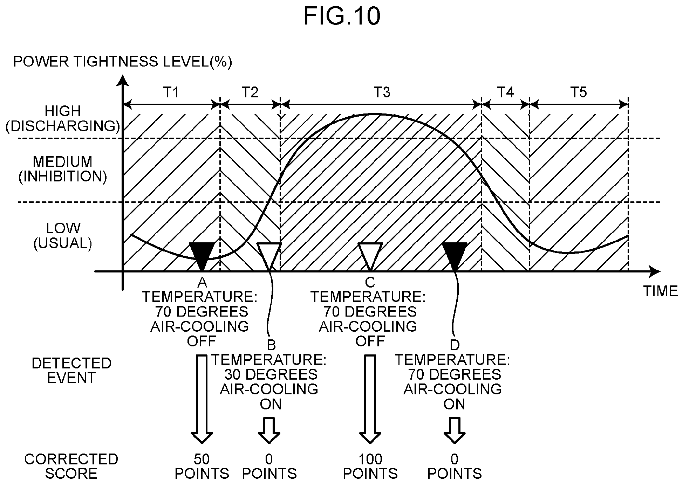

Here, an application example of the charging system 1 according to the embodiment will be described with reference to the drawings. FIG. 10 illustrates calculation of a corrected score according to a power tightness level according to the first embodiment. FIG. 10 illustrates corrected scores calculated by taking into consideration of a power tightness level for detected events A to D based on a message. In a graph of FIG. 10, a vertical axis represents a power tightness level [%], and a horizontal axis represents time. In one example of FIG. 10, time periods T1 and T5 are, for example, early morning and midnight. In the time periods T1 and T5, power is in a low power-tight state with the lowest tightness level, and the charging apparatus 52 operates in the usual mode. Time periods T2 and T4 are, for example, morning and evening. In the time periods T2 and T4, power is in the medium power-tight state with to some extent high tightness level, and the charging apparatus 52 operates in the inhibition mode. A time period T3 is, for example, daytime. In the time period T3, power is in the high power-tight state with particularly high tightness level, and the charging apparatus 52 operates in the discharging mode. A message transmitted and received between the charging station management server 51 and the charging apparatus 52 contains information indicating the device temperature of the charging apparatus 52 and information indicating the running state of an air-cooling apparatus provided on the charging apparatus 52.

For example, the security monitoring server 3 determines, as normal, a detected event B in which the device temperature is in a usual state (30 degrees) and the air-cooling apparatus is turned on, and outputs the anomaly score "0". The security monitoring server 3 determines, as normal, a detected event D in which the device temperature is in a high-temperature state (70 degrees) while the air-cooling apparatus is turned on, and outputs the anomaly score "0". Note that, although not illustrated in FIG. 10, the security monitoring server 3 similarly determines, as normal, a detected event in which the device temperature is in a usual state (30 degrees) and the air-cooling apparatus is turned off, and outputs the anomaly score "0". The security monitoring server 3 outputs the corrected score "0" indicating a normality determination based on a power tightness level regardless of the power-tight state for a security event determined as normal in anomaly detection based on messages of, for example, the detected events B and D.

In contrast, for example, the security monitoring server 3 determines, as anomaly, detected events A and C in which the device temperature is in a high-temperature state (70 degrees) and the air-cooling apparatus is turned off, and outputs the anomaly score "1". The security monitoring server 3 outputs the corrected score "50" based on a power tightness level according to a low power-tight state with the lowest power tightness level for the detected event A determined as anomaly in anomaly detection based on a message. Furthermore, the security monitoring server 3 outputs the corrected score "100" based on a power tightness level according to a high power-tight state with the highest power tightness level for the detected event C determined as anomaly in anomaly detection based on a message.

As described above, in the charging system 1 according to the embodiment, when the security monitoring server 3 observes a message transmitted and received between the charging station management server 51 and the charging apparatus 52, an anomaly score (corrected score) corrected according to a power tightness level is calculated for a detected event based on the message. In short, in the anomaly detection processing according to the embodiment, a corrected score according to a power tightness level is output as a detection result (determination result), so that anomaly in power equipment such as a security event accompanying a cyberattack can be detected in consideration of the power tightness level.

Furthermore, a corrected score according to a power tightness level is output as a detection result (determination result), so that a risk and an analysis priority level of a detected event can be highly evaluated at the time of power tightness. Thus, an analyst can be preferentially notified of an attack and an event that cause great damage. Since a risk and an analysis priority level can be highly evaluated at the time of power tightness, an attack and an event that cause great damage can be preferentially analyzed. Therefore, according to the above-described configuration in which a corrected score is calculated by while taking into consideration of a power tightness level for a result of anomaly detection, in anomaly (attack event) in power equipment accompanying a cyberattack, expansion of damage can be reduced, and human resources can be cut down. In short, in the anomaly detection processing according to the embodiment, anomaly in power equipment can be appropriately addressed even in a state of power tightness.

Furthermore, in the charging system 1 according to the embodiment, information indicating the charging control mode of the charging apparatus 52 is used as information indicating a power tightness level. In general, the power tightness level depends on an area and a time period. Thus, in determination using a power tightness level obtained by simply quantifying the degree of power tightness, the same detection result (determination result) can be exhibited for a plurality of charging apparatuses 52 of one charging station 5. In contrast, in the charging system 1 according to the embodiment, a corrected score is calculated by taking into consideration of a power tightness level using a charging control mode assumed to be different for individual charging apparatuses 52 according to user agreement, a setting, and the like. This enables anomaly detection to be more suitable for an actual power-tight state.

Other embodiments of the charging system 1 according to the present disclosure will be described below with reference to the drawings. Note that, in the following descriptions of the embodiments, differences will be mainly described, and description of contents overlapping with the above-described contents will be appropriately omitted.

### (Second Embodiment)

In the charging system 1 according to the embodiment described above, the anomaly detection unit 31 of the security monitoring server 3 may calculate not only a binary anomaly score such as a normality "0" or an anomaly "1" but an anomaly score indicating a level of a detected event, for example, 0 to 100.

In the corrected-score calculation processing based on a power tightness level performed by the score correction unit 32 according to the embodiment, correction is only required to be performed by increasing and decreasing an anomaly score according to a power tightness level. The corrected-score calculation processing is not limited to correction performed by replacing an anomaly score with a correction value according to a power tightness level. The corrected-score calculation processing may be performed by multiplying an anomaly score by a correction coefficient having the magnitude according to a power tightness level, or may be performed by adding a correction value of a correction amount according to a power tightness level to an anomaly score. For example, the correction coefficient and the correction amount are preliminarily determined and are stored in the storage unit 33.

In one example, in the discharging mode indicating the high power-tight state, the score correction unit 32 multiplies the anomaly score "1 > 0" by the largest correction coefficient "1.2" while taking into consideration of a power tightness level, and outputs the result. Similarly, in the inhibition mode indicating the medium power-tight state, the score correction unit 32 multiplies the anomaly score "1 > 0" by a correction coefficient "1.0", which is the largest next to that in the discharging mode, while taking into consideration of a power tightness level, sand outputs the result. Similarly, in the usual mode indicating the low power-tight state, the score correction unit 32 multiplies the anomaly score "1 > 0" by a correction coefficient "0.8", which is smaller than that in the inhibition mode, while taking into consideration of a power tightness level, and outputs the result. Note that the magnitudes of values of correction coefficients corresponding to the charging control modes are examples, and can be appropriately set within a range in which the magnitude relation therebetween is maintained.

In one example, in the discharging mode indicating the high power-tight state, the score correction unit 32 adds the largest correction value "100" of a correction amount to the anomaly score "1 > 0" while taking into consideration of a power tightness level, and outputs the result. Similarly, in the inhibition mode indicating the medium power-tight state, the score correction unit 32 adds, to the anomaly score "1 > 0", a correction value "80" of a correction amount, which is the largest next to that in the discharging mode, while taking into consideration of a power tightness level, and outputs the result. Similarly, in the usual mode indicating the low power-tight state, the score correction unit 32 adds, to the anomaly score "1 > 0", a correction value "50" of a correction amount, which is smaller than that in the inhibition mode, while taking into consideration of a power tightness level, and outputs the result. Note that the magnitudes (correction amounts) of values of correction values corresponding to the charging control modes are examples, and can be appropriately set within a range in which the magnitude relation therebetween is maintained.

As described above, according to the configuration in which an anomaly score indicating a level of a detected event is calculated, anomaly detection more suitable for an actual power-tight state can be performed. Therefore, according to the charging system 1 according to the embodiment, anomaly in power equipment can be appropriately addressed even in a power-tight state.

### (Third Embodiment)

In the charging systems 1 according to the embodiments described above, the security monitoring server 3 can deal with an index of a charging control mode as information indicating a power tightness level. In contrast, for example, the security monitoring server 3 according to the embodiment may make an inquiry to the charging station management server 51 and acquire information indicating a required power amount and a supplied power amount in charging and discharging instead of or in addition to information indicating the charging control mode. Then, the security monitoring server 3 may determine the power tightness level based on a power amount ratio (required power amount/supplied power amount). The power amount ratio is a ratio of the required power amount required by the vehicle 9 to the supplied power amount supplied from the power grid to the charging apparatus 52. Alternatively, the security monitoring server 3 may determine the power tightness level from a combination of the charging control mode and the power amount ratio.

In one example, in a case of a power amount ratio of, for example, 90% or more, the security monitoring server 3 determines that it is in the high power-tight state. Similarly, in a case of a power amount ratio of, for example, 70% or more, the security monitoring server 3 determines that it is in the medium power-tight state. Similarly, in a case of a power amount ratio of, for example, less than 70%, the security monitoring server 3 determines that it is in the low power-tight state. Ranges of values of power amount ratios defining the states are preliminarily determined and stored in the storage unit 33. Note that the ranges of values of power amount ratios defining the states are examples, and can be appropriately set within a range in which the magnitude relation therebetween is maintained.

As described above, effects similar to those in the above-described embodiments can be obtained even in the configuration in which a higher analysis priority level is determined for a larger power amount ratio by using the power amount ratio that is a ratio of a required power amount to a supplied power amount as information indicating a power tightness level. Note that the technique according to the embodiment can be appropriately applied to the charging systems 1 according to the embodiments described above.

### (Fourth Embodiment)

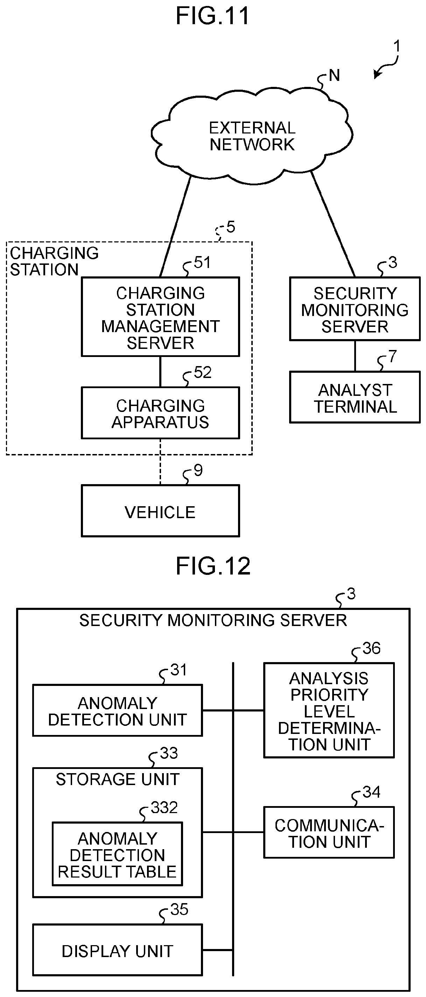

Although, in the above-described embodiments, cases have been described in which transmission/reception information is acquired via the network N from at least one of the charging station management server 51 and the charging apparatus 52 in the security monitoring server 3, these are not limitations. The transmission/reception information is transmitted and received via the network N between the charging station management server 51 and the charging apparatus 52. The security monitoring server 3 is communicably connected via the network N to the charging station management server 51 and the charging apparatus 52. The charging system 1 according to the embodiment is similar to the charging systems 1 according to the embodiments described above except that a form of communication between the charging station management server 51 and the charging apparatus 52 is different from a form of communication between the security monitoring server 3 and the analyst terminal 7. FIG. 11 illustrates an example of a configuration of the charging system 1 according to a fourth embodiment. As illustrated in FIG. 11, in the charging system 1 according to the embodiment, the charging apparatus 52 may be connected without the network N, that is, directly to the charging station management server 51. In short, the security monitoring server 3 may be communicably connected via the network N to the charging station management server 51 to which the charging apparatus 52 is communicably connected. In this case, the security monitoring server 3 may acquire transmission/reception information transmitted and received between the charging station management server 51 and the charging apparatus 52 from the charging station management server 51 via the network N. Furthermore, in the charging system 1 according to the embodiment, the analyst terminal 7 may be connected without the network N, that is, directly to the security monitoring server 3. Note that, as in the above-described embodiments, communication in one of a form of communication between the charging station management server 51 and the charging apparatus 52 and a form of communication between the security monitoring server 3 and the analyst terminal 7 may be performed via the network N.

As described above, effects similar to those in the above-described embodiments can be obtained even in the configuration in which a partial configuration of the charging system 1 is connected without the network N. Furthermore, according to the configuration, high-speed and stabilization in, for example, communication in each path are made possible while safety related to charging control can be improved by restricting an entry path to the charging apparatus 52 via the network N. Note that the technique according to the embodiment can be appropriately applied to the charging systems 1 according to the embodiments described above.

### (Fifth Embodiment)

In the above-described embodiments, a corrected score is calculated by correcting an anomaly score according to a power tightness level, that is, a case where a power tightness level is considered and a result (determination result) of anomaly detection is output, but this is not limited thereto. The charging system 1 according to the embodiment may determine an analysis priority level based on an anomaly score while considering a power tightness level.

The security monitoring server 3 according to the embodiment determines an analysis priority level by determining an analysis priority level between two or more detected events having the same anomaly score based on information about a power tightness level. Specifically, the security monitoring server 3 can execute analysis priority level determination processing based on a power tightness level according to the embodiment. FIG. 12 illustrates an example of a configuration of the security monitoring server 3 according to a fifth embodiment. As illustrated in FIG. 12, the security monitoring server 3 according to the embodiment is similar to the security monitoring servers 3 (see FIG. 2) according to the embodiments described above except that the security monitoring server 3 according to the embodiment includes an analysis priority level determination unit 36 instead of the score correction unit 32 and the storage unit 33 stores an anomaly detection result table 332 instead of the anomaly detection result table 331.

For example, in the security monitoring server 3 according to the embodiment, at least one processor 81 (see FIG. 5) implements the function of the security monitoring server 3 including the anomaly detection unit 31 and the analysis priority level determination unit 36. Note that the anomaly detection unit 31 may execute a part or all of the function of the analysis priority level determination unit 36. The anomaly detection unit 31 and the analysis priority level determination unit 36 may be implemented as one function. The analysis priority level determination unit 36 performs analysis priority level determination processing based on a power tightness level of determining a priority level based on a power tightness level on a message to which the same anomaly score has been given based on a result of anomaly detection processing. In short, the analysis priority level determination unit 36 determines an analysis priority level of a detected event by the analysis priority level determination processing. Details of the analysis priority level determination processing will be described later.

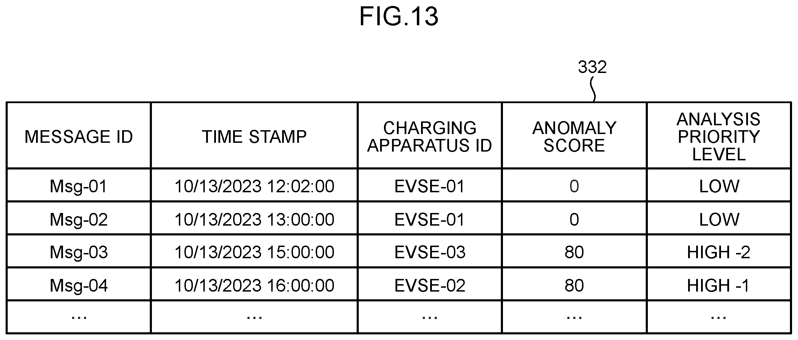

The storage unit 33 stores the anomaly detection result table 332 in which output results from the anomaly detection unit 31 and the analysis priority level determination unit 36 are saved. In short, the anomaly detection result table 332 saves, that is, a determination result output in anomaly detection processing performed by the security monitoring server 3 according to the embodiment. FIG. 13 illustrates an example of a configuration of the anomaly detection result table 332 according to the fifth embodiment. As illustrated in FIG. 13, the anomaly detection result table 332 has a configuration obtained by changing the item of "Corrected score" into an item of "Anomaly score" and adding an item of "Analysis priority level" in the anomaly detection result table 331 (see FIG. 7) according to the first embodiment. Information indicating an anomaly score calculated in anomaly detection performed by the anomaly detection unit 31 is saved in the item of "Anomaly score". Information indicating an analysis priority level set in the analysis priority level determination processing performed by the analysis priority level determination unit 36 is saved in the item of "Analysis priority level".

In the security monitoring server 3, the anomaly detection unit 31 and/or the analysis priority level determination unit 36 saves a determination result in the anomaly detection processing in the anomaly detection result table 332 stored in the storage unit 33, and manages the determination result. In one example, in the anomaly detection processing, each time an anomaly score is calculated for a detected event, that is, each time a determination result of normality or anomaly is output, the anomaly detection unit 31 saves information about the detected event in the anomaly detection result table 332. In one example, each time an analysis priority level is set for a security event (attack event) determined as anomaly among detected events, the analysis priority level determination unit 36 saves information about the attack event such as information indicating the analysis priority level in a record of the detected event of the anomaly detection result table 332.

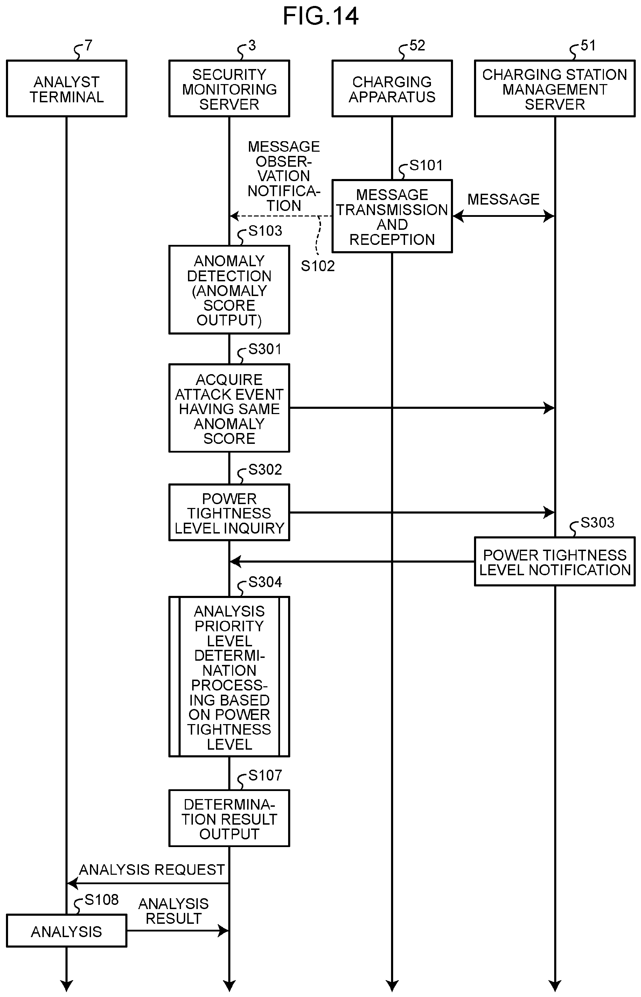

FIG. 14 is a sequence diagram illustrating an example of the procedure of the anomaly detection processing executed by the charging system according to the fifth embodiment. Here, differences from the flow (see FIG. 8) of the anomaly detection processing according to the first embodiment will be mainly described.

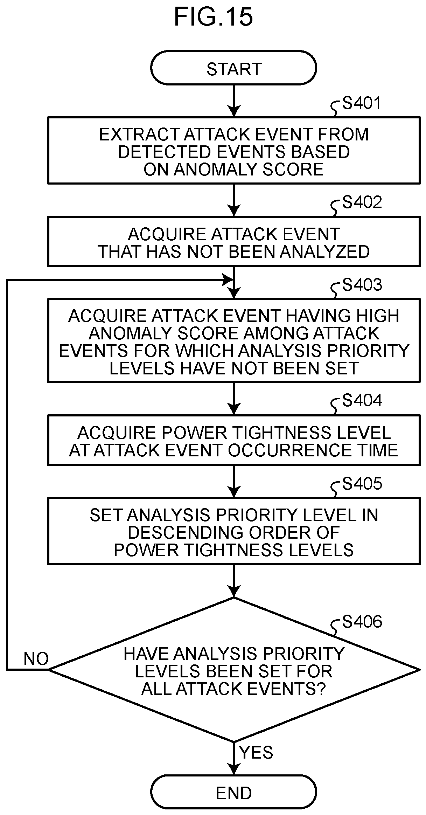

As in the flow in FIG. 8, in the security monitoring server 3, the anomaly detection unit 31 performs the anomaly detection processing based on an observed message, and outputs an anomaly score calculated in the anomaly detection processing (S103). Note that the anomaly detection unit 31 may calculate a binary anomaly score such as "Normal" or "Anomaly", may calculate a ternary anomaly score such as "High", "Medium", or "Low", or may calculate a four-or-more-valued anomaly score such as 0 to 100. Thereafter, the analysis priority level determination unit 36 acquires an attack event having the same anomaly score as the attack event of this time among past detected events (S301). The attack event is a security event determined as anomaly in anomaly detection, that is, having an anomaly score of more than "0" among detected events. Here, the same anomaly score is not necessarily required to be an equal anomaly score. The same anomaly score may be an anomaly score that satisfies a condition (threshold range) preliminarily determined and stored in the storage unit 33. Note that the attack event having the same anomaly score may be acquired in analysis priority level determination processing (see FIG. 15) to be described later.

Furthermore, the analysis priority level determination unit 36 inquires of the charging station management server 51 a power tightness level of a target charging apparatus 52 for the detected event (S302). The charging station management server 51 refers to the charging history table 5121 in response to an inquiry from the security monitoring server 3, and outputs information indicating the power tightness level of the corresponding charging apparatus 52 to the security monitoring server 3 (S303). As described above, the analysis priority level determination unit 36 acquires power tightness levels for a plurality of attack events to which the same anomaly score has been given containing an attack event detected this time. Note that information indicating a power tightness level of an attack event detected in the past may be stored in a stage in which the information was acquired in the past in, for example, the storage unit 33. Thus, an item for saving information indicating an acquired power tightness level may be provided in the anomaly detection result table 332 in FIG. 13. Alternatively, the storage unit 33 may store information indicating an acquired power tightness level for each attack event separately from the anomaly detection result table 332. Note that a power tightness level may be acquired in the analysis priority level determination processing (see FIG. 15) to be described later.

Thereafter, the analysis priority level determination unit 36 executes the analysis priority level determination processing (see FIG. 15) based on a power tightness level and sets an analysis priority level according to information indicating a power tightness level, notification of which has been given (S304). Specifically, the analysis priority level determination unit 36 determines an analysis priority level according to an anomaly score. The analysis priority level according to an anomaly score is the lowest, that is, "Low" for a detected event with an anomaly score of "0", which has been determined as normal in anomaly detection, for example. Furthermore, the analysis priority level according to an anomaly score is higher for a larger anomaly score for an attack event with an anomaly score of larger than "0", which has been determined as anomaly in anomaly detection, for example. The analysis priority level has any section such as "Medium", "High", and "Highest" according to an anomaly score. Thereafter, the analysis priority level determination unit 36 determines an analysis priority level between two or more attack events having the same anomaly score based on information about a power tightness level, such as "High-1" and "High-2", for an attack event among detected events. Then, the analysis priority level determination unit 36 saves information indicating a priority level set in a record of the corresponding detected event of the anomaly detection result table 332. Furthermore, as in the flow in FIG. 8, the anomaly detection unit 31 of the security monitoring server 3 outputs a determination result through, for example, the display unit 35 based on the anomaly detection result table 332 in which records of detected events are saved (S107). Note that, in the processing (S108) related to analysis, a person in charge of analysis or an allocation rule may be preliminarily determined in a stage in which an anomaly score is calculated and a stage in which an analysis priority level is set or updated. A configuration may be adopted in which a notification of an analysis request is given to the analyst terminal 7 at any timing such as in a stage in which an analysis priority level is set or updated. As described above, the analysis priority level determination unit 36 determines an analysis priority level based on a power tightness level and sets a priority level to an attack event.

Here, analysis priority level determination processing executed in the anomaly detection processing in FIG. 14 will be described. FIG. 15 is a flowchart illustrating an example of a procedure of the analysis priority level determination processing based on a power tightness level, which is executed in the security monitoring server 3 according to the fifth embodiment. FIG. 15 illustrates a flow in a case where the processing of S301 is not performed in the flow in FIG. 14.

The analysis priority level determination unit 36 extracts an attack event to which the same anomaly score has been given from past detected events based on an anomaly score of an attack event of this time (S301). Note that the processing of the step is the same as the processing of S301 executed before a power tightness level is inquired of the charging station management server 51 in the procedure of FIG. 14, and is required to be executed in one of the present step or S301 in FIG. 14. Furthermore, the analysis priority level determination unit 36 acquires an attack event that has not been analyzed among the past attack events (S402). The analysis priority level of the acquired attack event that has not been analyzed is reset at this time point for subsequent processing, and, for example, is dealt with as an attack event for which an analysis priority level has not been set in the same category as an attack event detected this time. In short, the determination of an analysis priority level in the flow in FIG. 15 includes redetermination of an analysis priority level for a past detected event that has not been analyzed.

The analysis priority level determination unit 36 acquires an attack event having a high anomaly score among attack events for which analysis priority levels have not been set including the attack event detected this time (S403). Furthermore, the analysis priority level determination unit 36 acquires power tightness levels at an attack event occurrence time from the storage unit 33 or the charging station management server 51 (S404), and sets analysis priority levels in descending order of the power tightness levels (S405). In short, the analysis priority level determination unit 36 sets analysis priority levels, such as "High-1", "High-2", ..., in descending order of the power tightness levels for a plurality of attack events having a "High" anomaly score, and ranks attack events having the same anomaly score. Then, the analysis priority level determination unit 36 determines whether or not analysis priority levels have been set for all the attack events (S406). When analysis priority levels are not set for all the attack events (S406: No), processing of S403 to S406 is executed on an attack event having a next high anomaly score among the attack events for which analysis priority levels have not been set. In contrast, when analysis priority levels are set for all the attack events (S406: Yes), the flow in FIG. 15 ends, and the processing proceeds to S107 in FIG. 14.

In the processing of S107 in FIG. 14, the anomaly detection unit 31 of the security monitoring server 3 outputs a determination result through, for example, the display unit 35 based on the anomaly detection result table 332 in which records of detected events are saved (S107). Any output form of the determination result may be adopted. In one example, a list of detected events may be displayed such that a detected event having a higher analysis priority level is highly ranked.

As described above, in the charging system 1 according to the embodiment, the security monitoring server 3 determines an analysis priority level for an event that has occurred and has not analyzed while taking into consideration of a power-tight state. According to the configuration, since a high analysis priority level can be set for an attack event in a power-tight state, anomaly in power equipment can be appropriately addressed even in a power-tight state. For example, an attack event in a power-tight state can be preferentially analyzed.

Specifically, for an attack event that has not been analyzed, the analysis priority level determination unit 36 sets analysis priority levels in the same anomaly score in descending order of power tightness levels at occurrence time points until the analysis priority levels are set for all the attack events. For example, even when analysis priority levels are similarly determined as "High" based on an anomaly score, ranking such as "High-1" and "High-2" is performed from the viewpoint that a higher power tightness level indicates higher emergency. This enables an attack event that needs to be preferentially analyzed from the viewpoint of a power tightness level among attack events having the same anomaly score to be clarified and reflected in the analysis priority level.

Furthermore, the analysis priority level determination unit 36 acquires attack events that have not been analyzed including attack events received in the past and sets analysis priority levels for them. As described above, according to the configuration in which a list of past events that have not been analyzed is acquired, priority levels are set also for attack events detected in the past in the subsequent processing. Therefore, a case where an attack event of this time is desired to be prioritized in consideration of a power tightness level over attack events detected in the past can also be handled.

Note that the technique according to the embodiment can be appropriately applied to the charging systems 1 according to the embodiments described above. For example, the charging system 1 according to the first embodiment, in which an absolute evaluation is performed according to a power tightness level, may be combined with the charging system 1 according to the embodiment, in which an evaluation relative to past attack events is made in a form of an analysis priority level by using a power tightness level. For example, a corrected score may be calculated by using a correction coefficient and the like based on a power tightness level in the corrected-score calculation processing according to the first embodiment while an analysis priority level based on a power tightness level may be set in the analysis priority level determination processing according to the embodiment. According to the combination, when the same corrected score has a different breakdown of an anomaly score part and a correction part, an analysis priority level more suitable for an actual power tightness level can be set.

### (Sixth Embodiment)

Although, in the charging systems 1 according to the embodiments described above, cases where records of detected events are sequentially saved in one of the anomaly detection result tables 331 and 332 have been described, these are not limited thereto. Furthermore, although a case where the display unit 35 displays (outputs) a display screen has been described, this is not limited thereto. In the display screen, a list of detected events is displayed in order based on corrected scores and analysis priority levels based on the anomaly detection result tables 331 and 332.

For example, a detected event associated with power equipment including the charging station management server 51 and the charging apparatus 52 can include a power system security event and a non-power system security event. Here, the power system security event is a detected event associated with power control, in which a power control protocol includes an attack target, for example. The non-power system security event is a detected event that can be analyzed by a usual information engineer, such as a denial of service (DoS) attack. For example, the power system security event has a high risk of occurrence of damage expansion and equipment damage unless the power system security event is appropriately addressed, so that it is preferable that an analyst with knowledge of power equipment is allocated. Furthermore, from viewpoints of grasping an occurrence situation and a handling situation of a security event, appropriately allocating an analyst, and grasping a progress situation of analysis handling, it is preferable that detected events associated with power equipment are managed by separating a power system and a non-power system.

For example, in the charging system 1 according to the embodiment, the security monitoring server 3 may generate a power system detected event and a non-power system detected event in the anomaly detection result tables 331 and 332 as other anomaly detection result tables 331 and 332. Alternatively, an item in which information indicating whether a detected event is of a power system or a non-power system is saved may be further provided in the anomaly detection result tables 331 and 332.

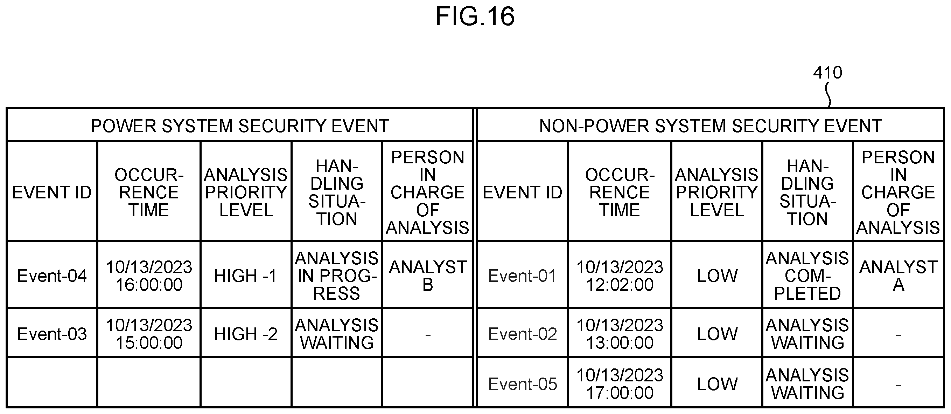

FIG. 16 illustrates an example of an event management screen (display screen 410) to be displayed in the security monitoring server 3 according to a sixth embodiment. For example, as illustrated in FIG. 16, the security monitoring server 3 may divide a list of detected events into a power system and a non-power system, display the display screen 410 through the display unit 35, and output the display screen 410 to the outside. In the display screen 410, lists of detected events are displayed in order based on a corrected score and an analysis priority level. Note that an external display connected to the security monitoring server 3 and the analyst terminal 7 may display the display screen 410.

In the display screen 410 in FIG. 16, display of the detected events of the power system and the non-power system includes items of at least "Event ID", "Analysis priority level", and "Handling situation". Furthermore, the display of the detected events of the power system and the non-power system may further include items of "Occurrence time" and "Person in charge of analysis".

Identification information for uniquely identifying a detected event is displayed in the item of "Event ID". "Message ID" may be used as "Event ID". For example, an analysis priority level set in the analysis priority level determination processing in FIG. 15 is displayed in the item of "Analysis priority level". Note that the item of "Analysis priority level" may be dynamically updated according to a result of determining an analysis priority level for a new security event. The display order of records of detected events may be updated, for example, dynamically changed accompanying the update. Furthermore, for example, a corrected score calculated in the corrected-score calculation processing in FIG. 9 or an analysis priority level according to the corrected score may be displayed in the item of "Analysis priority level". Information indicating an analyst to whom analysis of a detected event has been allocated, such as a name, is displayed in the item of "Person in charge of analysis". Note that the display of the item of "Person in charge of analysis" may function as an input field for receiving input from a person in charge of analysis. For example, information such as "Analysis waiting" indicating that event analysis has not been undertaken, "Analysis in progress", and "Analysis completed" is displayed in the item of "Handling situation". Note that, when analysis of a detected event has been completed, the corresponding detected event may be deleted from the list in the display screen 410 instead of displaying "Analysis completed" in the item of "Handling situation".

As described above, in the charging system 1 according to the embodiment, detected events are divided into a power system and a non-power system to be managed. According to the configuration, a power system security event to which an analyst having knowledge of power equipment is preferably allocated can be easily grasped, and an appropriate analyst can perform analysis. Furthermore, a non-power system security event to which any analyst can be allocated can be easily grasped. Efficiency of allocation can be improved, and a detected event can be quickly addressed. Therefore, according to the charging system 1 according to the embodiment, anomaly in power equipment can be appropriately addressed even in a power-tight state. Note that the technique according to the embodiment can be appropriately applied to the charging systems 1 according to the embodiments described above.

Note that, in the above-described embodiments, "whether to be A or not" refers to at least one of "to be A" and "not to be A". In short, in the above-described embodiments, "whether to be A or not" may be determined by determining only "to be A", only "not to be A", or both thereof.

Computer programs to be executed by apparatuses of the charging systems 1 of the embodiments described above may be provided by being recorded in a computer-readable recording medium (computer program product) such as a CD-ROM, an FD, a CD-R, and a DVD in a file in an installable format or an executable format.

The programs to be executed by apparatuses of the charging systems 1 of the embodiments described above may be provided by being saved in a computer connected to a network such as the Internet and downloaded via the network. Furthermore, the programs to be executed by apparatuses of the charging systems 1 of the embodiments described above may be provided or distributed via the network such as the Internet.

Furthermore, the programs to be executed by apparatuses of the charging systems 1 of the embodiments described above may be provided by being preliminarily incorporated into a ROM and the like.

According to at least one of the above-described embodiments, anomaly in power equipment can be appropriately addressed even in a power-tight state.

Although some embodiments of the present invention have been described, these embodiments have been presented as examples, and are not intended to limit the scope of the invention. These embodiments can be implemented in various other forms, and various omissions, substitutions, and changes can be made without departing from the gist of the invention. These embodiments and variations thereof are included in the scope and gist of the invention, and are also included in the invention set forth in the claims and the equivalent scope thereof.

### (Supplementary Note)

The following techniques are disclosed by the above descriptions of the embodiments.
(1) An anomaly detection method performed in a monitoring apparatus that monitors communication between first power equipment and second power equipment,
   the first power equipment being configured to perform at least one of supplying power to and receiving power from a charging/discharging device connected to the first power equipment,
   the second power equipment being configured to control the first power equipment,
   the method comprising:
      performing anomaly detection based on transmission/reception information transmitted and received between the first power equipment and the second power equipment; and
      determining an analysis priority level for analyzing a detected event, the analysis priority level being determined based on
         an anomaly score of the detected event, the detected event being a security event detected in the anomaly detection, and
         information about a power tightness level indicating a degree of tightness of power demand at a detection time point.
(2) The anomaly detection method according to (1), wherein the determining an analysis priority level includes:
   calculating a corrected score by correcting the anomaly score of the detected event based on the information about a power tightness level; and
   setting the analysis priority level according to the corrected score.
(3) The anomaly detection method according to (2), wherein the calculating a corrected score includes performing correction by replacing the anomaly score with a correction value according to the information about a power tightness level.
(4) The anomaly detection method according to (2), wherein the calculating a corrected score includes performing correction by multiplying the anomaly score by a correction coefficient having magnitude according to the information about a power tightness level.
(5) The anomaly detection method according to (2), wherein the calculating a corrected score includes performing correction by adding, to the anomaly score, a correction value having a correction amount according to the information about a power tightness level.
(6) The anomaly detection method according to any one of (1) to (5) claim 1, wherein the determining an analysis priority level includes determining the analysis priority level between two or more detected events having the same anomaly score, based on the information about a power tightness level.
(7) The anomaly detection method according to (6), wherein
   the determining the analysis priority level includes determining, for attack events determined as anomaly by the anomaly detection out of the detected events, the analysis priority level between two or more of the attack events having the same anomaly score based on the information about a power tightness level, and
   the determining an analysis priority level includes setting, for a detected event other than the attack events, the analysis priority level according to the anomaly score.
(8) The anomaly detection method according to (6) or (7), wherein the determining the analysis priority level includes redetermining an analysis priority level for a past detected event that has not been analyzed.
(9) The anomaly detection method according to any one of (1) to (8), wherein
   the information about a power tightness level is information indicating an operation mode of the first power equipment,
   the operation mode includes at least
      a usual mode in which power is supplied from the first power equipment to the charging/discharging device without restriction on power supply, and
      an inhibition mode in which power is supplied from the first power equipment to the charging/discharging device with restriction on power supply, and
   the determining an analysis priority level includes determining, in the inhibition mode, an analysis priority level higher than an analysis priority level in the usual mode.
(10) The anomaly detection method according to (9), wherein
   the operation mode further includes a discharging mode in which the first power equipment receives power from the charging/discharging device, and
   the determining an analysis priority level includes determining, in the discharging mode, an analysis priority level higher than an analysis priority level in the inhibition mode.
(11) The anomaly detection method according to any one of (1) to (10), wherein
   the information about a power tightness level indicates a power amount ratio, the power amount ratio being a ratio of a required power amount required by the charging/discharging device to a supplied power amount supplied from a power grid to the first power equipment, and
   the determining an analysis priority level includes determining a higher analysis priority level for a larger power amount ratio.
(12) The anomaly detection method according to any one of (1) to (11), wherein
   the monitoring apparatus is communicably connected to each of the first power equipment and the second power equipment via a network, and
   the performing anomaly detection includes acquiring, via the network from at least one of the first power equipment and the second power equipment, the transmission/reception information transmitted and received via the network between the first power equipment and the second power equipment.
(13) The anomaly detection method according to any one of (1) to (11), wherein
   the monitoring apparatus is communicably connected via a network to the second power equipment to which the first power equipment is communicably connected, and
   the performing anomaly detection includes acquiring, via the network from the second power equipment, the transmission/reception information transmitted and received between the first power equipment and the second power equipment.
(14) A monitoring apparatus configured to monitor communication between first power equipment and second power equipment,
   the first power equipment being configured to perform at least one of supplying power to and receiving power from a charging/discharging device connected to the first power equipment,
   the second power equipment being configured to control the first power equipment,
   the monitoring apparatus comprising:
      at least one processor connected to a memory and configured to
      perform anomaly detection based on transmission/reception information transmitted and received between the first power equipment and the second power equipment, and
      determine an analysis priority level for analyzing a detected event, the analysis priority level being determined based on
         an anomaly score of the detected event, the detected event being a security event detected in the anomaly detection, and
         information about a power tightness level indicating a degree of tightness of power demand at a detection time point.
(15) A monitoring apparatus including:
   at least one processor; and

   a memory configured to store at least one program to be executed by the at least one processor,
   wherein the at least one processor implements the anomaly detection method according to any one of (1) to (13) by executing the at least one program.
(16) A program causing a computer to execute processing, wherein the computer implements a monitoring apparatus of monitoring communication between first power equipment and second power equipment, wherein the first power equipment is capable of executing at least one of power supply to or power reception from a charging/discharging device connected to the first power equipment, the second power equipment controls the first power equipment, and the processing to be executed by the computer comprises:
   performing anomaly detection based on transmission/reception information transmitted and received between the first power equipment and the second power equipment; and
   determining an analysis priority level for analyzing a detected event, the analysis priority level being determined based on
      an anomaly score of the detected event, the detected event being a security event detected in the anomaly detection, and
      information about a power tightness level indicating a degree of tightness of power demand at a detection time point.
(17) A program causing a computer to execute the anomaly detection method according to any one of (1) to (13), the computer implementing a monitoring apparatus serving to monitor communication between first power equipment and second power equipment, wherein the first power equipment is capable of executing at least one of power supply to or power reception from a charging/discharging device connected to the first power equipment, and the second power equipment controls the first power equipment.
(18) A recording medium (computer program product) on which the program to be executed by a computer according to (16) or (17) is recorded.

### EXPLANATIONS OF LETTERS OR NUMERALS

1 CHARGING SYSTEM
3 SECURITY MONITORING SERVER (MONITORING APPARATUS)
31 ANOMALY DETECTION UNIT
32 SCORE CORRECTION UNIT
33 STORAGE UNIT
331 ANOMALY DETECTION RESULT TABLE
34 COMMUNICATION UNIT
35 DISPLAY UNIT
36 ANALYSIS PRIORITY LEVEL DETERMINATION UNIT
5 CHARGING STATION
51 CHARGING STATION MANAGEMENT SERVER (SECOND POWER EQUIPMENT)
511 CHARGING CONTROL INSTRUCTION UNIT
512 STORAGE UNIT
5121 CHARGING HISTORY TABLE
513 COMMUNICATION UNIT
52 CHARGING APPARATUS (FIRST POWER EQUIPMENT)
521 CHARGING CONTROL UNIT
522 COMMUNICATION UNIT
7 ANALYST TERMINAL
8 INFORMATION PROCESSING APPARATUS
81 PROCESSOR
82 MAIN STORAGE APPARATUS
83 AUXILIARY STORAGE APPARATUS
84 I/F CIRCUIT
89 BUS
9 VEHICLE (CHARGING/DISCHARGING DEVICE)
N NETWORK

## Claims

1. An anomaly detection method performed in a monitoring apparatus that monitors communication between first power equipment and second power equipment, the first power equipment being configured to perform at least one of supplying power to and receiving power from a charging/discharging device connected to the first power equipment, the second power equipment being configured to control the first power equipment, the anomaly detection method comprising:
performing anomaly detection based on transmission/reception information transmitted and received between the first power equipment and the second power equipment; and
determining an analysis priority level for analyzing a detected event, the analysis priority level being determined based on
an anomaly score of the detected event, the detected event being a security event detected in the anomaly detection, and
information about a power tightness level indicating a degree of tightness of power demand at a detection time point.

2. The anomaly detection method according to claim 1, wherein the determining an analysis priority level includes:
calculating a corrected score by correcting the anomaly score of the detected event based on the information about a power tightness level; and
setting the analysis priority level according to the corrected score.

3. The anomaly detection method according to claim 2, wherein the calculating a corrected score includes performing correction by replacing the anomaly score with a correction value according to the information about a power tightness level.

4. The anomaly detection method according to claim 2, wherein the calculating a corrected score includes performing correction by multiplying the anomaly score by a correction coefficient having magnitude according to the information about a power tightness level.

5. The anomaly detection method according to claim 2, wherein the calculating a corrected score includes performing correction by adding, to the anomaly score, a correction value having a correction amount according to the information about a power tightness level.

6. The anomaly detection method according to claim 1, wherein the determining an analysis priority level includes determining the analysis priority level between two or more detected events having the same anomaly score, based on the information about a power tightness level.

7. The anomaly detection method according to claim 6, wherein
the determining the analysis priority level includes determining, for attack events determined as anomaly by the anomaly detection out of the detected events, the analysis priority level between two or more of the attack events having the same anomaly score based on the information about a power tightness level, and
the determining an analysis priority level includes setting, for a detected event other than the attack events, the analysis priority level according to the anomaly score.

8. The anomaly detection method according to claim 6, wherein the determining the analysis priority level includes redetermining an analysis priority level for a past detected event that has not been analyzed.

9. The anomaly detection method according to any one of claims 1 to 8, wherein
the information about a power tightness level is information indicating an operation mode of the first power equipment,
the operation mode includes at least
a usual mode in which power is supplied from the first power equipment to the charging/discharging device without restriction on power supply, and
an inhibition mode in which power is supplied from the first power equipment to the charging/discharging device with restriction on power supply, and
the determining an analysis priority level includes determining, in the inhibition mode, an analysis priority level higher than an analysis priority level in the usual mode.

10. The anomaly detection method according to claim 9, wherein
the operation mode further includes a discharging mode in which the first power equipment receives power from the charging/discharging device, and
the determining an analysis priority level includes determining, in the discharging mode, an analysis priority level higher than an analysis priority level in the inhibition mode.

11. The anomaly detection method according to any one of claims 1 to 8, wherein
the information about a power tightness level indicates a power amount ratio, the power amount ratio being a ratio of a required power amount required by the charging/discharging device to a supplied power amount supplied from a power grid to the first power equipment, and
the determining an analysis priority level includes determining a higher analysis priority level for a larger power amount ratio.

12. The anomaly detection method according to any one of claims 1 to 8, wherein
the monitoring apparatus is communicably connected to each of the first power equipment and the second power equipment via a network, and
the performing anomaly detection includes acquiring, via the network from at least one of the first power equipment and the second power equipment, the transmission/reception information transmitted and received via the network between the first power equipment and the second power equipment.

13. The anomaly detection method according to any one of claims 1 to 8, wherein
the monitoring apparatus is communicably connected via a network to the second power equipment to which the first power equipment is communicably connected, and
the performing anomaly detection includes acquiring, via the network from the second power equipment, the transmission/reception information transmitted and received between the first power equipment and the second power equipment.

14. A monitoring apparatus configured to monitor communication between first power equipment and second power equipment, the first power equipment being configured to perform at least one of supplying power to and receiving power from a charging/discharging device connected to the first power equipment, the second power equipment being configured to control the first power equipment, the monitoring apparatus comprising:
at least one processor configured to
perform anomaly detection based on transmission/reception information transmitted and received between the first power equipment and the second power equipment, and
determine an analysis priority level for analyzing a detected event, the analysis priority level being determined based on
an anomaly score of the detected event, the detected event being a security event detected in the anomaly detection, and
information about a power tightness level indicating a degree of tightness of power demand at a detection time point.

15. A program causing a computer to execute processing, wherein the computer implements a monitoring apparatus of monitoring communication between first power equipment and second power equipment, wherein the first power equipment is capable of executing at least one of power supply to or power reception from a charging/discharging device connected to the first power equipment, the second power equipment controls the first power equipment, and the processing to be executed by the computer comprises:
performing anomaly detection based on transmission/reception information transmitted and received between the first power equipment and the second power equipment; and
determining an analysis priority level for analyzing a detected event, the analysis priority level being determined based on
an anomaly score of the detected event, the detected event being a security event detected in the anomaly detection, and
information about a power tightness level indicating a degree of tightness of power demand at a detection time point.
